# EUROPÄISCHE PATENTSCHRIFT

(11) **EP 1 502 527 B1**
(45) Veröffentlichungstag und Bekanntmachung des Hinweises auf die Patenterteilung: **24.09.2008**
(21) Anmeldenummer: 04017123.3
(22) Anmeldetag: 20.07.2004
(51) Int. Cl.: A47J 31/40

(54) **Brühvorrichtung mit axial wirkendem Gewindemechanismus**
Brewing device with axially acting thread-mechanism
Dispositif d'infusion avec un système de mouvement axial d'un élément taraudé

(30) Priorität: 29.07.2003 DE 10334538
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 0 931 490
- DE-U- 20 105 672

## Beschreibung

Die vorliegende Erfindung betrifft eine Brühvorrichtung gemäß dem Oberbegriff von Anspruch 1.

Kaffeemaschinen, die mit gemahlenem Kaffee gefüllte Filterkissen in einer geeigneten Aufnahmevorrichtung aufnehmen und bei denen in einem zweiten Schritt die mit dem Kaffeepad gefüllte Aufnahmevorrichtung geschlossen wird, um Kaffee zu brühen, sind in vielfältigen Ausführungsformen bekannt.

Die US 3,630,155 zeigt eine solche Kaffeemaschine, bei der ein Filterkissen in eine Brüheinheit eingelegt wird, die in eine entsprechende Vorrichtung an der Kaffeemaschine eingehakt und mit einem Handgriff arretiert wird. Der Handgriff bewegt gleichzeitig eine Druckplatte in axialer Richtung auf die Brüheinheit, in der das Filterkissen durch die Druckplatte positioniert wird. Die Druckplatte bildet den oberen Abschluss der Brüheinheit und dient gleichzeitig zur Einleitung des heißen Wassers in das Filterkissen, dabei schließt die Druckplatte die Brühkammer nicht vollständig ab, so dass in der Brühkammer ständig Atmosphärendruck herrscht.

Eine weitere Kaffeemaschine zur Zubereitung von Kaffee, Tee oder anderen Heißgetränken ist in der GB 939,813 beschrieben. Auch diese Vorrichtung weist einen Halter zur Aufnahme eines Filterbeutels auf, der unbewegbar mit der Vorrichtung verbunden ist. Zum Bilden einer Brühkammer kann dieser Halter mit einer Abdeckung verschlossen werden. Diese Abdeckung ist über einen Hebelarm an einem Drehpunkt mit der Vorrichtung verbunden, wobei die Abdeckung zum Schließen der Brühkammer um diesen Drehpunkt geschwenkt wird. Bedingt durch die Schwenkbewegung setzt die Abdeckung nicht in gleicher Weise auf den Halter auf. Dadurch werden die Dichtflächen einseitig stärker belastet und es besteht die Gefahr, dass die gefüllten Filterkissen in ihrer Aufnahme verrutschen und eine Leckage in der Brühkammer verursachen.

Demgegenüber beschreibt die DE 201 05 672U eine Brühvorrichtung für Portionskapseln mit einer Brüheinheit die ein Gehäuseoberteil mit Spindelkolben aufweist. Der Spindelkolben ist in Längsrichtung axial beweglich ausgeführt, während ein Spindelkolbenantriebsrad bei einer Drehbewegung in seiner axialen Position festgehalten wird.

Viele der bisher bekannten, insbesondere für Niederdruckkaffeemaschinen verwendeten Brühvorrichtungen zur Zubereitung von Kaffee weisen trotz teilweise aufwändiger Konstruktionen für die Überführung der Filterkissen-Aufnahme in eine Brühkammer Sicherheitsmängel auf, die im Wesentlichen durch die Konstruktionen der Verschließmechanismen verursacht sind. Beim Einsatz solcher Brühvorrichtungen besteht für den Nutzer dieser Kaffeemaschinen ein erhebliches Gefährdungspotential, d.h. die Gefahr von Verbrühungen.

Der vorliegenden Erfindung liegt daher die Aufgabe zugrunde, eine Brühvorrichtung zur Zubereitung von Kaffee der eingangs genannten Art bereitzustellen, die eine verbesserte Konstruktion aufweist mit einem möglichst einfachen Aufbau, einer hohen Betriebssicherheit und möglichst geringen Herstellungskosten.

Diese Aufgabe wird durch eine gattungsgemäße Brühvorrichtung mit den Merkmalen des Anspruchs 1 gelöst.

Der Gewindemechanismus ermöglicht, die Umsetzung einer radialen Bewegung um eine vertikale Achse in eine axiale Bewegung in Richtung dieser vertikalen Achse. Da das in axialer Richtung geführte Aufdrückteil mit dem oberen Teil der Brühkammer verbunden ist, kann für ein sicheres Schließen der Brühkammer die vertikale Achse des Gewindemechanismus koaxial oder überlagert mit einer senkrecht zur Öffnung des oberen Teils stehenden Achse ausgestaltet sein. Der Gewindemechanismus ermöglicht eine bessere Dosierung der für das Überführen des oberen und unteren Teils der Brühkammer in eine Brühstellung notwendigen Kraft. Dabei lässt sich der Gewindemechanismus sowohl durch einen Elektromotor als auch manuell antreiben. Durch die Umsetzung der radialen Bewegung am Betätigungsteil in eine axiale Bewegung des oberen Teils der Brühkammer kann eine Schwenkbewegung des bewegten Teils der Brühkammer vollständig vermieden werden, wodurch eine Führung des bewegten Teils keine durch die Schwenkbewegung erzeugten seitlich wirkenden Kräftte kompensieren muss. Des Weiteren sind ebenfalls keine Ausgleichsvorrichtungen nötig, um den bewegten Teil der Brühkammer parallel auf den nicht bewegten Teil zu platzieren oder ein ungleichmäßiges Aufsetzen zu kompensieren. Die vertikale Anordnung des Gewindemechanismus ermöglicht im weiteren die Anordnung der Brühkammer und eines Auslaufs der Kaffeemaschine in Ausrichtung mit einer vertikalen Achse. Durch eine vertikale Heißwasserführung wird die Gefährdung für den Nutzer bei Schäden und/oder Bedienungsfehlern gering gehalten.

Eine zweckmäßige Ausführung der Hubeinrichtung sieht vor, dass das Betätigungsteil und das längs geführte Andrückteil mittels des Gewindemechanismus bereichsweise teleskopartig aufschraubbar sind, wobei das Betätigungsteil in seiner axialen Lage festgehalten ist. Die Hubeinrichtung ist dadurch mit einer geringen Kraft betätigbar, wobei das Betätigungsteil sich ausschließlich radial um die vertikale Achse dreht.

Für eine einfache Umsetzung der erfindungsgemäßen Hubeinrichtung umfasst der Gewindemechanismus mindestens einen in axialer Richtung ansteigenden Rampenbereich. Für eine verbesserte Kraftübertragung in axialer Richtung kann der Gewindemechanismus bevorzugt als mindestens dreigängiges Gewinde ausgebildet sein.

Bevorzugt kann das Betätigungsteil ringförmig ausgebildet sein und der ansteigende Rampenbereich am Betätigungsteil angeordnet sein. Durch die ringförmige Ausbildung des Betätigungsteils ist das Betätigungsteil und der angeordnete ansteigende Rampenbereich konstruktiv an die Anforderungen der Brühvorrichtung angepasst.

Erfindungsgemäß umfasst der Gewindemechanismus einen zumindestens bereichsweise wendelförmigen Führungssteg. Der wendelförmige Führungssteg ermöglicht im Besonderen in Kombination mit dem ansteigenden Rampenbereich eine einfache Lösung für die Umwandlung der radialen Bewegung der Betätigungsteils in die axiale Bewegung des längs geführten Aufdrückteils.

Um eine angepasste Konstruktion des längs geführten Aufdrückteils an das Betätigungsteil der Hubeinrichtung zu ermöglichen, kann das mit dem oberen Teil verbundene, längs geführte Aufdrückteil ringförmig ausgebildet sein und der zumindestens bereichsweise wendelförmige Führungssteg an der Außenumfangsfläche des längsgeführten Aufdrückteils angeordnet sein. Das Zusammenwirken des längsgeführten Aufdrückteils mit dem Betätigungsteil, ermöglicht die abgestimmte Konstruktion des längsgeführten Aufdrückteils im Zusammenwirken mit dem Rampenbereich am Betätigungsteil und damit eine gute Bewegbarkeit des Gewindemechanismus.

Eine weitere Ausbildung sieht vor, dass der Führungssteg an einer der Brühstellung zugeordneten Position einen waagerecht verlaufenden Abschnitt aufweist. So können die beim Brühen entstehenden Druckkräfte in vertikaler Richtung weitergeleitet und durch das in seiner axialen Lage festgehaltene Betätigungsteil aufgenommen werden. Auch wird so das Auslösen einer Rückdrehbewegung verhindert. Der waagerecht verlaufende Abschnitt des Führungsstegs kennzeichnet die Endstellung bei geschlossener Brühstellung des längsgeführten Aufdrückteils in axialer Richtung.

Günstigerweise ist an dem ansteigenden Rampenbereich ein Haken angeordnet, der den Führungssteg umgreift. Der Haken bildet mit dem Rampenbereich eine Führungsnut, in der der Führungssteg geführt ist. Durch diesen Haken wird das mit dem wendelförmigen Führungssteg verbundene längsgeführte Aufdrückteil bei einer Rückbewegung des Gewindemechanismus in radialer Richtung in die Öffnungsstellung mit zurückgenommen.

Zur Ausbildung der Brühvorrichtung als kompakte Baugruppe kann die Hubeinrichtung, der obere Teil und der untere Teil der Brühkammer in einem Gehäuse aufgenommen sein. Eine solche als kompakte Baugruppe gestaltete Brühvorrichtung bildet die zentrale Einheit einer Kaffeemaschine. Der kompakte Aufbau ermöglicht den Einbau der gleichen Baugruppe in verschiedene Geräteausführungen. Die Einbindung der Brühkammer und der Hubeinrichtung in einem Gehäuse, möglicherweise in Verbindung mit einer seitlichen Abdeckung des unteren Teils in Form eines verbreiterten Griffs, schützt den Nutzer bei einem Versagen von Dichtungen oder einer nicht sachgemäßen Benutzung vor Verbrühungen durch Heißwasserspritzer.

Ein Vorteil ist es weiter, wenn gemäß einer Ausgestaltung das längsgeführte Aufdrückteil eine Führungsrippe und das Gehäuse eine Führungsnut aufweisen und die Führungsrippe zur axialen Führung des längsgeführten Aufdrückteils beweglich in der Führungsnut angeordnet ist. Dies ermöglicht eine sichere axiale Führung des Aufdrückteils während des Öffnens und Schließens der Brühkammer. Bevorzugt können, um ein Verkanten des längsgeführten Aufdrückteils mit dem Betätigungsteil zu vermeiden, zumindestens drei Führungsrippen gleichmäßig über das ringförmige Aufdrückteil angeordnet sein, die in jeweilige Führungsnuten im Gehäuse längs beweglich geführt sind.

Eine bevorzugte Ausführungsform sieht vor, dass das drehbare Betätigungsteil durch eine um eine vertikale Achse schwenkbare Handhabe von der Außenseite des Gehäuses betätigbar ausgestaltet ist. Durch die schwenkbare Handhabe wird eine manuelle Betätigung des Gewindemechanismus ermöglicht, die in einfacher Form mit den Fingern einer Hand erfolgen kann. Dabei kann die schwenkbare Handhabe zwischen 30° und 180°, bevorzugt 90°, um die vertikale Achse schwenkbar ausgebildet sein. Die vertikale Achse der schwenkbaren Handhabe kann für eine einfache Konstruktion des Gewindemechanismus mit der vertikalen Achse des Betätigungsteils übereinstimmen oder zumindestens koaxial angeordnet sein.

Eine Variante sieht vor, dass das Gehäuse an der Außenseite mindestens eine vertikal verlaufende Grifffläche aufweist. Die vertikal verlaufende Grifffläche ermöglicht ein sicheres Aufsetzen der Fingerkuppen auf dem Gehäuse und damit eine sichere Greifbewegung zwischen der Handhabe und dem Gehäuse, wodurch auch bei einer manuellen Betätigung des Gewindemechanismus ohne zusätzliche Mittel große Schließkräfte aufgebracht werden können, die ein sicheres Schließen der Brühkammer gewährleisten.

Eine zweckmäßige Ausgestaltung sieht vor, dass der obere Teil eine Druckplatte umfasst, und die Druckplatte mit dem unteren Teil die Brühkammer bildet. Durch diese Ausgestaltung braucht nur die Druckplatte auf die Anforderungen der Brühkammer ausgelegt werden, während die Konstruktion der weiteren Bauelemente des oberen Teils nur hinsichtlich ihrer Funktion erfolgen kann.

Um eine Leckage und das Austreten von heißem Brühwasser aus der Brühkammer zu vermeiden, kann zwischen dem oberen Teil und dem untern Teil mindestens eine Dichtung angeordnet sein, die die Brühkammer zwischen dem oberen Teil und dem unteren Teil abdichtet. Dabei kann die Dichtung bevorzugterweise als Lippendichtung ausgebildet sein, deren Dichtkraft sich mit steigendem Druck des abzudichtenden Mediums erhöht. Die Dichtung, insbesondere als Lippendichtung, erhöht die Sicherheit des Nutzer im Hinblick auf den Kontakt mit heißem Brühwasser.

Um einen Anschlag gegen eine Überlastung der Dichtung zwischen dem oberen Teil und dem unteren Teil der Brühkammer zu ermöglichen, kann die Druckplatte einen ringförmig umlaufenden, axial vorstehenden Steg aufweisen, der zum Bilden der Brühkammer in der Brühstellung auf das untere Teil aufdrückt. Der ringförmig umlaufende, axial vorstehende Steg der Druckplatte kann in Kombination mit einem seitlich versetzten Absatz im unteren Teil eine Verbesserung der Positionierung des oberen Teils und des unteren Teils zueinander in der Brühstellung ermöglichen.

Zum sicheren Einlegen und Entnehmen der Kafffeepads kann der untere Teil als Verschiebe-Kassette ausgebildet sein, die in der Öffnungsstellung zwischen einer Betriebsstellung und einer Einsetz- oder Entnahmestellung bewegbar ist.

Vorteilhafterweise kann die Verschiebe-Kassette in der Brühstellung zwischen dem oberen Teil und einer mit dem Gehäuse verbundenen Abstützplatte angeordnet sein. Dadurch kann sich die Verschiebe-Kassette gegenüber dem Gehäuse abstützen und in der Brühstellung eine sichere Verbindung des oberen und unteren Teils zur Brühkammer ermöglichen. Um während der Brühstellung eine Bewegung der Verschiebe-Kassette zu verhindern, kann die Verschiebe-Kassette in der Brühstellung arretierbar sein. Dazu können im hinteren Bereich der Verschiebe-Kassette Öffnungen vorgesehen sein, in die am längs geführten Aufdrückteil angeordnete Arretierkeile bei der Bewegung des oberen Teils in axialer Richtung eingreifen.

Um ein Einlaufen des aus der Brühkammer ablaufenden Kaffees in das Gehäuse zu verhindern, kann zwischen dem unteren Teil und dem Gehäuse mindestens eine Dichtung angeordnet sein, die den unteren Teil gegenüber dem Gehäuse abdichtet. Die Dichtung verhindert auch das Eindringen kleinster Restmengen, insbesondere dann, wenn die Dichtung über der Abstützplatte übersteht.

Eine Modifikation sieht vor, dass die Verschiebe-Kassette mindestens einen ringförmig umlaufenden axial vorstehenden Absatz aufweist, der in der Brühstellung auf die Abstützplatte aufdrückt. Durch diesen Anschlag wird eine Überlastung der Dichtung zwischen dem unteren Teil der Brühkammer und dem Gehäuse vermieden. In der Öffnungsstellung liegt die Verschiebe-Kassette auf der Dichtung auf. Sobald die Kassette durch das sich in axialer Richtung bewegende obere Teil der Brühkammer auf die Abstützplatte aufgedrückt wird, erfolgt die Kraftübertragung von dem axial vorstehenden Absatz direkt auf die Abstützplatte und nicht über die Dichtung.

Eine vorteilhafte Ausbildung der Erfindung sieht vor, dass das Betätigungsteil und die Abstützplatte mit dem Gehäuse verbunden sind. Dadurch kann die von dem sich um die vertikale Achse drehende Betätigungsteil bewirkte und von dem Hubmechanismus auf das obere Teil der Brühkammer aufgebrachte Kraft über die Druckplatte an die Verschiebe-Kassette und von der Kassette über die Abstützplatte an das Gehäuse übertragen werden.

Zur Ausbildung einer gegenüber der Atmosphäre abgedichteten Brühkammer kann der obere Teil und der untere Teil der Brühkammer in der Brühstellung eine geschlossene Brühkammer bilden. Dadurch kann, insbesondere bei Niederdruckkaffeemaschinen, ein Druck von 1,0 bar bis 2,0 bar, bevorzugt 1,5 bar bis 1,8 bar aufgebaut werden, um Kaffee zu Brühen.

Im Folgenden wird anhand der Zeichnungen eine Ausführungsform der erfindungsgemäßen Brühvorrichtung näher erläutert. Es zeigen:
- Fig. 1: eine seitliche Schnittansicht der Brühvorrichtung in einer Brühstellung, und
- Fig. 2: eine perspektivische Seitenansicht des oberen Teils der Brühkammer.

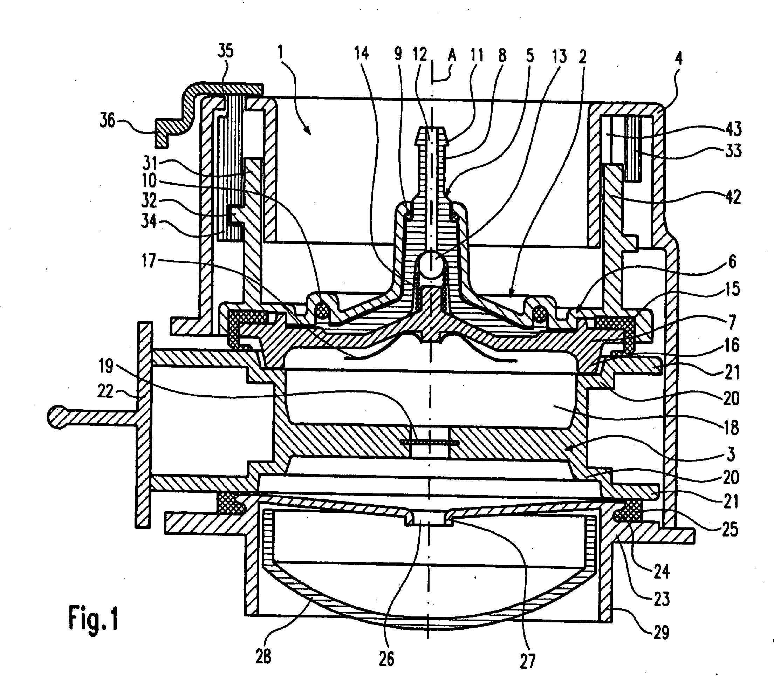

Die in Fig. 1 dargestellte Brühvorrichtung ist Bestandteil einer Niederdruckkaffeemaschine, die in hier nicht näher beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einem innenliegenden Ventilteil 5, einem Abdeckteil 6 und einer Druckplatte 7. Dabei ist das Abdeckteil 6 derart ausgeformt, dass es das innenliegende Ventilteil 5 in sich aufnimmt, wobei ausschließlich der Wasseranschluss 8 des Ventilteils 5 aus dem Abdeckteil 6 herausragt.

Zwischen dem Abdeckteil 6 und dem Ventilteil 5 sind zwei Dichtungsringe 9 und 10 angeordnet, wobei der Dichtungsring 9 am Austritt des Wasseranschlusses 8 aus dem Abdeckteil 6 platziert ist und der Dichtungsring 10, am Außenumfang des sich vom Wasseranschluss 8 seitlich erstreckenden Ventilteils 5, das Ventilteil 5 zum Abdeckteil 6 abdichtet. Am Wasseranschluss 8 ist an dem offenliegenden Ende eine umlaufende Nase 11 vorhanden, die den Anschluss und die Befestigung einer Brühwasserleitung erleichtert. Am unteren Ende des durch den Wasseranschluss 8 führenden Einlaufkanals 12 für das Brühwasser ist eine Ventilkugel 13 angeordnet, die sich mit einer Feder 14 gegen die Druckplatte 7 abstützt. Das Ventilteil 5 liegt mit seiner Unterseite an der Druckplatte 7 an, wobei die Feder 14 durch einen Vorsprung der Druckplatte 7 geführt wird. Das Abdeckteil 6 erstreckt sich vom seitlichen Dichtungsring 10 des Ventilteils 5 weiter nach außen und umfasst mit seiner Außenkante seitlich die Lippendichtung 15, die zwischen dem Abdeckteil 6 und der Druckplatte 7 platziert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht.

Die Druckplatte 7 des oberen Brühkammerteils 2 bildet zusammen mit der Wechselkassette 3 eine Brühkammer 18. Zum Ausbilden der Brühkammer 18 weist die Wechselkassette 3 eine Vertiefung auf, in deren Mitte sich der Brühkammerauslass 19 befindet. Im Seitenbereich weist die Vertiefung einen ersten Absatz 20 auf, auf dem der Steg 16 der Druckplatte 7 aufliegt. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet gleichzeitig die Oberkante der Wechselkassette 3. In der Mitte der Druckplatte 7 sind an einem vorspringenden Zapfen mehrere sich seitlich erstreckende nach unten gerichtete Federarme 17 angeordnet, die in die Brühkammer 18 hineinragen. Die Wechselkassette 3 weist an einer Seite einen Griff 22 auf, mit dem die Wechselkassette 3 in der Öffnungsstellung aus der Brühvorrichtung 1 herausgezogen werden kann. Dazu weist das Gehäuse 4 an der Seite des Griffes 22 eine entsprechende Öffnung auf. Die Wechselkassette 3 kann auch in einem gewendeten Zustand, d.h. die Ober- und Unterseite der Wechselkassette 3 sind vertauscht, in der Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen, sind auch auf der Unterseite der Wechselkassette 3 im seitlichen Bereich der Vertiefung der Absatz 20 und der Vorsprung 21 ausgebildet.
Die Wechselkassette 3 stützt sich auf ihrer Unterseite mit dem äußeren Absatz 21 auf der Abstützplatte 23 ab, die seitlich über das Gehäuse 4 übersteht und mit diesem verbunden ist. die Abstützplatte 23 weist eine radial umlaufende Nut 24, in der ein Dichtungsring 25 angeordnet ist, der im geöffneten Zustand der Brühvorrichtung 1 über die Abstützplatte 23 vorsteht. Die Abstützplatte 23 weist mittig einen Ablauf 26 mit einem nach unten gezogen Spritzschutz 27 auf. Die Abstützplatte 23 weist zwischen dem Auflagebereich der Wechselkassette 3 und dem Ablauf 26 ein Gefälle auf, das den sicheren Ablauf des aus der Brühkammer 18 kommenden Kaffees in den Auslauf 28 ermöglicht.

Der in seinem Mittelbereich rund zulaufende Auslauf 28 ist in einer Vertiefung der Abstützplatte 23 angeordnet, die durch den sich in axialer Richtung erstreckenden Ringabschnitt 29 der Abstützplatte 23 gebildet wird. Der Auslauf 28 leitet den Kaffee zu mindestens einer, üblicherweise zwei, hier nicht gezeigten Auslauftüllen.

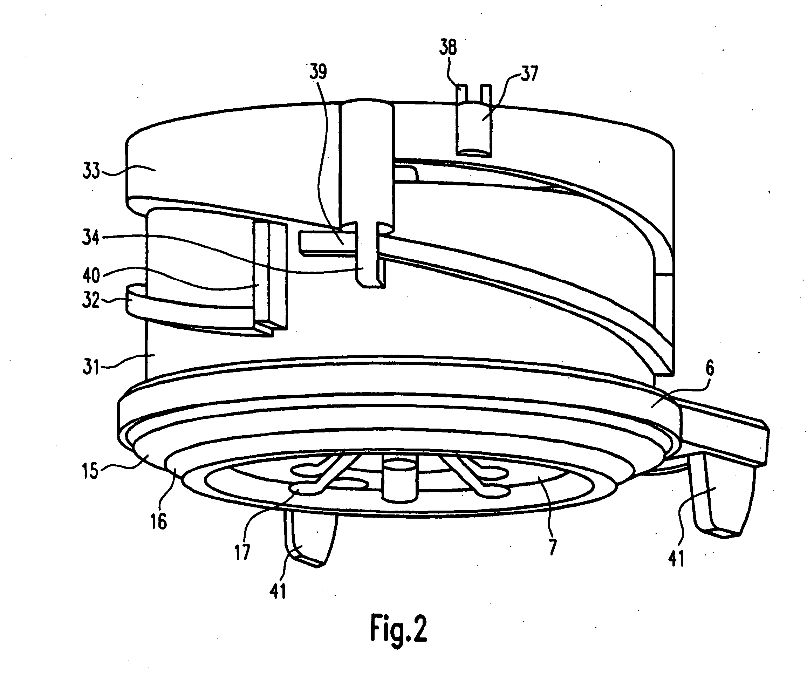

Um das obere Brühkammerteil 2 in axialer Richtung zu bewegen, ist das Abdeckteil 6 mit einem sich in axialer Richtung erstreckenden ringförmig ausgebildeten Aufdrückteil 31 verbunden. Am Außenumfang des Aufdrückteils 31 ist außen ein Führungssteg 32 ausgebildet, der sich wendelförmig um den Außenumfang des Aufdrückteils 31 erstreckt. Auf der Innenseite des Aufdrückteils 31 sind vorzugsweise drei Führungsrippen 42 angeordnet, die die axiale Längsführung des Aufdrückteils 31 ermöglichen in Verbindung mit einer gleichen Anzahl von Führungsnuten 43, die auf dem Umfang verteilt im Gehäuse realisiert sind. Um den Außenumfang des Aufdrückteils 31 ist weiter das Betätigungsteil 33 platziert, das sich oberhalb des Führungsstegs 32 bis zu Oberkante des Gehäuses erstreckt. Das ebenfalls ringförmig ausgebildete Betätigungsteil 33 ist, wie in Fig. 2 deutlich erkennbar, rampenförmig ausgebildet und ist drehbar um das Aufdrückteil 31 angeordnet. Durch einen Öffnungsschlitz 35 an der Stirnseite des Gehäuses 4 ist das Betätigungsteil 33 mit einem Handgriff 36 verbunden. Dabei wird der Handgriff 36 an dem Gewindestutzen 37 verschraubt, der koaxial an der Oberkante des Betätigungsteils 33 angeordnet ist und mit einem Führungsabschnitt 38 in den Öffnungsschlitz hineinragt. Das Betätigungsteil 33 weist weiter einen Haken 34 auf, der den Führungssteg 32 umgreift. Der Führungssteg 32 weist einen waagerechten Stegteil 39 auf, der in der in Fig. 2 gezeigten Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil 40 auf, der im unteren Ende des wendelförmigen Führungsstegs 32 angeordnet ist und als Anschlag der Hubeinrichtung für die Öffnungsstellung der Brühvorrichtung 1 dient. Am Abdeckteil 6 sind zwei Arretierzapfen 41 angeordnet, die in axialer Richtung nach unten über den Steg 16 der Druckplatte 7 vorstehen und in entsprechende Öffnungen der Wechselkassette 3 eingreifen, um diese zu positionieren und ein Herausziehen in der Brühstellung zu verhindern.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Endstellung gefahren ist, wobei die obere Endstellung durch den Anschlag des vertikalen Stegteils 40 an den vertikalen Rampenbereich des Betätigungsteils definiert ist, die nur auf dem unteren Dichtring 25 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 gezeigten Stellung wird die obere Vertiefung üblicherweise mit zwei Kaffeepads bzw. einem mit einer doppelten Menge an gemahlenem Kaffee gefüllten Kaffeepad, versehen. Die beladene Wechselkassette 3 wird wieder in die Brühvorrichtung 1 eingeschoben.

Nach Beendigung des Beladevorgangs wird die Brühvorrichtung 1 mit dem Handgriff 36 in die Brühstellung überführt. Dabei wird der Handgriff 36 um die vertikale Achse A geschwenkt und das mit ihm verbundene Betätigungsteil 33 um diese vertikale Achse A gedreht. Das Betätigungsteil 33 drückt mit seinen rampenförmig ausgebildeten Abschnitten auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in vertikaler Richtung auf die Wechselkassette 3 gedrückt. Bei dieser Schließbewegung berührt zunächst die Lippendichtung 15 den oberen Vorsprung 21. Als nächstes berührt der ringförmig umlaufende von der Druckplatte 7 axial vorstehende Steg 16 den oberen Absatz 20 der Wechselkassette 3, wobei sich die Lippendichtung 15 weiter an den oberen Vorsprung 21 andrückt. Bei einer Zunahme des axialen Drucks über den Steg 16 auf die Wechselkassette 3 wird der untere Vorsprung 21 auf die Abstützplatte 23 gedrückt, wobei der Dichtungsring 25 zusammengedrückt wird und damit seine Dichtwirkung zum unteren Vorsprung 21 erhöht. Durch den Eingriff des ringförmigen axial vorstehenden Steg 16 in den oberen Absatz 20 wird während des Schließvorgangs die Lage der Wechselkassette 3 zum oberen Brühkammerteil 2 ausgerichtet. Während des Schließens der Brühkammer 18 drückt die Druckplatte 7 das Kaffeepad in die Vertiefung der Wechselkassette 3. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Im Folgenden wird nunmehr die Wirkungs- und Funktionsweise der oben beschriebenen Brühvorrichtung 1 näher erläutert.

In der in Fig. 1 dargestellten geschlossenen Brühstellung sind üblicherweise in der Brühkammer 18 zwei aufeinander liegende Filterpads angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschlossenen Brühstellung wird von einer Pumpe heißes Wasser über die Anschlussleitung dem Ventilteil 5 zugeführt. Durch den Druck des Brühwassers wird die Feder 14 durch die Ventilkugel 13 zusammengedrückt, wobei die Ventilkugel 13 sich von ihrem Ventilsitz löst und einen Wasserzulauf zur Brühkammer 18 ermöglicht. Die Eintrittsöffnungen in die Brühkammer 18 sind in dem in Fig. 1 dargestellten Schnitt nicht erkennbar. Je nach Ausgestaltung des Brühkammerauslasses 19 kann die Pumpe in der gegenüber der Umgebung geschlossenen Brühkammer 18 bei einer in einer Niederdruckkaffeemaschine eingesetzten Brühvorrichtung 1 einen Druck zwischen 1,2 bar und 2,0 bar aufbauen. Das Kaffeepad wird zunächst durch das Wasser befeuchtet und im weiteren Verlauf von dem Brühwasser durchströmt, das am Brühkammerauslass 19 aus der Brühkammer 18 als Kaffee austritt und über den Ablauf 26 und dem Auslauf 28 aus der oder den Auslauftüllen aus der Brühvorrichtung 1 abläuft. Die Abstützplatte 23 ist in dem Bereich unter der Brühkammer 18 zum Ablauf 26 hin geneigt, um einen sicheren und vollständigen Ablauf des Kaffees zu gewährleisten. Nach einem bestimmten, einstellbaren Zeitraum bzw. einer geförderten Wassermenge, wird die Pumpe wieder abgeschaltet und damit der Brühvorgang beendet.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der Öffnungsstellung über den Führungssteg 32 auf das Aufdrückteil 31 und damit auf das obere Brühkammerteil 2. Die Federarme 17 lösen beim Öffnen der Brühkammer 18 das Kaffeepad von der Druckplatte 7, so dass das Kaffeepad in der Vertiefung der Wechselkassette 3 verbleibt.

In der nicht dargestellten Öffnungsstellung sind die konisch ausgestalteten Arretierzapfen 41 aus den entsprechenden Öffnungen in der Wechselkassette 3 herausbewegt und geben diese frei. Die Druckplatte 7 ist ebenfalls so weit nach oben bewegt, dass sich der Steg 16 oberhalb der Öffnung für die Wechselkassette 3 im Gehäuse 4 befindet. In dieser Öffnungsstellung kann die Wechselkassette 3 zusammen mit dem gebrauchten, durch das Brühwasser befeuchteten Kaffeepad aus der Brühvorrichtung 1 am Griff 22 herausgezogen werden. Nach der Entnahme des verbrauchten Kaffeepads aus der Brühkammervertiefung der Wechselkassette 3 kann die Wechselkassette 3 für einen weiteren Brühvorgang erneut mit einem Kaffeepad versehen werden, oder ungefüllt in die Brühvorrichtung zurückgeschoben werden.

## Patentansprüche

1. Brühvorrichtung (1) zur Zubereitung von Kaffee, insbesondere für eine Niederdruckkaffeemaschine, mit einer Brühkammer (18), die einen oberen Teil (2) und einen unteren Teil (3) aufweist, wobei der untere Teil (3) eine Vertiefung zur Aufnahme von mindestens einem mit gemahlenem Kaffee gefüllten Filterkissen oder Kaffeepad aufweist, der obere Teil (2) und der untere Teil (3) relativ zueinander bewegbar ausgeführt und von einer Öffnungsstellung, in der das Kaffeepad einsetz- oder entnehmbar ist, in eine Brühstellung überführbar sind, und mit einer Hubeinrichtung, die mit dem oberen Teil (2) der Brühkammer (18) verbunden und den oberen Teil (2) mittels eines Gewindemechanismus mit einem zumindest bereichsweise wendelförmigen Führungssteg (32) und mittels eines Rampenbereichs in axialer Richtung bewegend ausgestaltet ist, der Gewindemechanismus umfasst ein um eine vertikale Achse (A) drehbares Betätigungsteil, (33) und ein mit dem oberen Teil (2) verbundenes, längsgeführtes Aufdrückteil (31),
**dadurch gekennzeichnet, dass** an dem Rampenbereich ein Haken (34) angeordnet ist, der den Führungssteg (32) umgreift.

2. Brühvorrichtung (1) nach Anspruch 1,
**dadurch gekennzeichnet, dass** das Betätigungsteil (33) und das längsgeführte Aufdrückteil (31) mittels des Gewindemechanismus bereichsweise teleskopartig aufschraubbar sind, wobei das Betätigungsteil (33) in seiner axialen Lage festgehalten ist.

3. Brühvorrichtung (1) nach einem der Ansprüche 1 oder 2,
**dadurch gekennzeichnet, dass** der Gewindemechanismus mindestens einen in axialer Richtung ansteigenden Rampenbereich umfasst.

4. Brühvorrichtung (1) nach Anspruch 3,
**dadurch gekennzeichnet, dass** das Betätigungsteil (33) ringförmig ausgebildet ist und der ansteigende Rampenbereich am Betätigungsteil (33) angeordnet ist.

5. Brühvorrichtung (1) nach einem der Ansprüche 1 bis 4,
**dadurch gekennzeichnet, dass** das mit dem oberen Teil (2) verbundene, längsgeführte Aufdrückteil (31) ringförmig ausgebildet ist und der zumindest bereichsweise wendelförmige Führungssteg (32) an der Außenumfangsfläche des längsgeführten Aufdrückteils (31) angeordnet ist.

6. Brühvorrichtung (1) nach Anspruch 5,
**dadurch gekennzeichnet, dass** der Führungssteg (32) an einer der Brühstellung zugeordneten Position einen waagerecht verlaufenden Abschnitt (39) aufweist.

7. Brühvorrichtung (1) nach einem der Ansprüche 1 bis 6,
**dadurch gekennzeichnet, dass** die Hubeinrichtung, der obere Teil (2) und der untere Teil (3) der Brühkammer (18) in einem Gehäuse (4) aufgenommen sind.

8. Brühvorrichtung (1) nach Anspruch 7,
**dadurch gekennzeichnet, dass** das längsgeführte Aufdrückteil (31) eine Führungsrippe (42) und das Gehäuse (4) eine Führungsnut (43) aufweisen, und die Führungsrippe (42) zur axialen Führung des längsgeführten Aufdrückteils (31) beweglich in der Führungsnut (43) angeordnet ist.

9. Brühvorrichtung (1) nach einem der Ansprüche 7 oder 8,
**dadurch gekennzeichnet, dass** das drehbare Betätigungsteil (33) durch eine um eine vertikale Achse (A) schwenkbare Handhabe (36) von der Außenseite des Gehäuses (4) betätigbar ausgestaltet ist.

10. Brühvorrichtung (1) nach Anspruch 8,
**dadurch gekennzeichnet, dass** das Gehäuse (4) an der Außenseite mindestens eine vertikal verlaufende Grifffläche aufweist.

11. Brühvorrichtung (1) nach einem der Ansprüche 1 bis 10,
**dadurch gekennzeichnet, dass** der obere Teil (2) eine Druckplatte (7) umfasst, und die Druckplatte (7) mit dem unteren Teil (3) die Brühkammer (18) bildet.

12. Brühvorrichtung (1) nach einem der Ansprüche 1 bis 11,
**dadurch gekennzeichnet, dass** zwischen dem oberen Teil (2) und dem unteren Teil (3) mindestens eine Dichtung (15) angeordnet ist, die die Brühkammer (18) zwischen dem oberen Teil (2) und dem unteren Teil (3) abdichtet.

13. Brühvorrichtung (1) nach einem der Ansprüche 11 oder 12,
**dadurch gekennzeichnet, dass** die Druckplatte (7) einen ringförmig umlaufenden, axial vorstehenden Steg (16) aufweist, der zum Bilden der Brühkammer (18) in der Brühstellung auf das untere Teil (3) aufdrückt.

14. Brühvorrichtung (1) nach einem der Ansprüche 1 bis 13,
**dadurch gekennzeichnet, dass** der untere Teil (3) als Verschiebe-Kassette ausgebildet ist, die in der Öffnungsstellung zwischen einer Betriebsstellung und einer Einsetz- oder Entnahmestellung bewegbar ist.

15. Brühvorrichtung (1) nach Anspruch 14,
**dadurch gekennzeichnet, dass** die Verschiebe-Kassette in der Brühstellung zwischen dem oberen Teil (2) und einer mit dem Gehäuse (4) verbundenen Abstützplatte (23) angeordnet ist.

16. Brühvorrichtung (1) nach einem der Ansprüche 7 bis 15,
**dadurch gekennzeichnet, dass** zwischen dem unteren Teil (3) und dem Gehäuse (4) mindestens eine Dichtung (25) angeordnet ist, die den unteren Teil (3) gegenüber dem Gehäuse (4) abdichtet.

17. Brühvorrichtung (1) nach einem der Ansprüche 15 oder 16,
**dadurch gekennzeichnet, dass** die Verschiebe-Kassette mindestens einen ringförmig umlaufenden axial vorstehenden Absatz (21) aufweist, der in der Brühstellung auf die Abstützplatte (23) aufdrückt.

18. Brühvorrichtung (1) nach einem der Ansprüche 12 bis 17,
**dadurch gekennzeichnet, dass** das Betätigungsteil (33) und die Abstützplatte (23) mit dem Gehäuse (4) verbunden sind.

19. Brühvorrichtung (1) nach einem der Ansprüche 1 bis 18,
**dadurch gekennzeichnet, dass** der obere Teil (2) und der untere Teil (3) der Brühkammer (18) in der Brühstellung eine geschlossene Brühkammer (18) bilden.

20. Niederdruckkaffeemaschine mit einer Brühvorrichtung (1) nach einem der Ansprüche 1 bis 19 und mindestens einem, in der Vertiefung des unteren Teils (3) der Brühkammer (18) angeordneten und mit gemahlenen Kaffee gefüllten Filterkissen (Kaffeepad).

## Claims

1. Brewing device (1) for preparing coffee, in particular for a low-pressure coffee machine, with a brewing chamber (18) comprising a top part (2) and a bottom part (3), which bottom part (3) has a recess for accommodating at least one filter pad filled with ground coffee or coffee pad, the top part (2) and the bottom part (3) being disposed so that they can be moved relative to one another and transferred from an open position, in which the coffee pad can be inserted or removed, into a brewing position, and having a lifting mechanism which is connected to the top part (2) of the brewing chamber (18) and designed to move the top part (2) in an axial direction by means of a thread mechanism with a guide web (32) that is helically shaped in at least certain regions and by means of a ramp region, and the thread mechanism has an operating part (33) which is rotatable about a vertical axis (A) and a longitudinally guided pressing part (31) connected to the top part (2),
**characterised in that** a hook (34) is disposed on the ramp region which engages round the guide web (32).

2. Brewing device (1) as claimed in claim 1,
**characterised in that** the operating part (33) and the longitudinally guided pressing part (31) can be screwed telescopically in certain regions by means of the thread mechanism, and the operating part (33) is held fixed in its axial position.

3. Brewing device (1) as claimed in one of claims 1 or 2,
**characterised in that** the thread mechanism has at least one ramp region rising in the axial direction.

4. Brewing device (1) as claimed in claim 3,
**characterised in that** the operating part (33) is of an annular shape and the rising ramp region is disposed on the operating part (33).

5. Brewing device (1) as claimed in one of claims 1 to 4,
**characterised in that** the longitudinally guided pressing part (31) connected to the top part (2) is of an annular shape and the guide web (32), which is helically shaped in at least certain regions, is disposed on the external circumferential surface of the longitudinally guided pressing part (31).

6. Brewing device (1) as claimed in claim 5,
**characterised in that** the guide web (32) has a horizontally extending portion (39) in a position co-operating with the brewing position.

7. Brewing device (1) as claimed in one of claims 1 to 6,
**characterised in that** the lifting mechanism, top part (2) and bottom part (3) of the brewing chamber (18) are accommodated in a housing (4).

8. Brewing device (1) as claimed in claim 7,
**characterised in that** the longitudinally guided pressing part (31) has a guide rib (42) and the housing (4) has a guide groove (43), and the guide rib (42) is provided as a means of axially guiding the longitudinally guided pressing part (31) as it moves in the guide groove (43).

9. Brewing device (1) as claimed in one of claims 7 or 8,
**characterised in that** the rotatable operating part (33) is provided in the form of a manual lever (36) pivotable about a vertical axis (A), which can be operated from outside of the housing (4).

10. Brewing device (1) as claimed in claim 8,
**characterised in that** the housing (4) has at least one vertically extending gripping surface on the outside.

11. Brewing device (1) as claimed in one of claims 1 to 10,
**characterised in that** the top part (2) has a pressure plate (7) and the pressure plate (7) forms the brewing chamber (18) in conjunction with the bottom part (3).

12. Brewing device (1) as claimed in one of claims 1 to 11,
**characterised in that** at least one seal (15) is disposed between the top part (2) and the bottom part (3), which seals the brewing chamber (18) between the top part (2) and the bottom part (3).

13. Brewing device (1) as claimed in one of claims 11 or 12,
**characterised in that** the pressure plate (7) has an annularly extending, axially projecting web (16), which applies pressure to the bottom part (3) in order to form the brewing chamber (18) in the brewing position.

14. Brewing device (1) as claimed in one of claims 1 to 13,
**characterised in that** the bottom part (3) is designed as a sliding cassette, which can be moved between an operating position and an insertion or removal position when in the open position.

15. Brewing device (1) as claimed in claim 14,
**characterised in that,** in the brewing position, the sliding cassette is disposed between the top part (2) and a support plate (23) connected to the housing (4).

16. Brewing device (1) as claimed in one of claims 7 to 15,
**characterised in that** at least one seal (25) is disposed between the bottom part (3) and the housing (4), which seals the bottom part (3) off from the housing (4).

17. Brewing device (1) as claimed in one of claims 15 or 16,
**characterised in that** the sliding cassette has at least one annularly extending, axially projecting shoulder (21), which pushes on the support plate (23) in the brewing position.

18. Brewing device (1) as claimed in one of claims 12 to 17,
**characterised in that** the operating part (33) and the support plate (23) are connected to the housing (4).

19. Brewing device (1) as claimed in one of claims 1 to 18,
**characterised in that** the top part (2) and the bottom part (3) of the brewing chamber (18) form a closed brewing chamber (18) in the brewing position.

20. Low-pressure coffee machine with a brewing device (1) as claimed in one of claims 1 to 19 and at least one filter pad filled with ground coffee (coffee pad) disposed in the recess of the bottom part (3) of the brewing chamber (18).

## Revendications

1. Dispositif d'infusion (1) pour préparer du café, en particulier pour une machine à café basse pression, comportant une chambre d'infusion (18) qui comprend une partie supérieure (2) et une partie inférieure (3), la partie inférieure (3) présentant un creux pour recevoir au moins un sachet-filtre ou une dosette de café souple rempli de café moulu, la partie supérieure (2) et la partie inférieure (3) étant conçues pour être mobiles l'une par rapport à l'autre et étant aptes à passer d'une position ouverte dans laquelle la dosette de café peut être mise ou enlevée, à une position d'infusion, et comprenant un dispositif de soulèvement qui est relié à la partie supérieure (2) de la chambre d'infusion (18) et qui est conçu pour déplacer dans le sens axial ladite partie supérieure (2) à l'aide d'un mécanisme à filetage pourvu d'une nervure de guidage (32) hélicoïdale au moins par zones, et à l'aide d'une zone en forme de rampe, le mécanisme à filetage comprenant un élément d'actionnement (33) apte à tourner sur un axe vertical (A) et un élément presseur (31) relié à la partie supérieure (2) et guidé longitudinalement,
**caractérisé en ce qu'**il est prévu sur la zone en forme de rampe un crochet (34) qui entoure la nervure de guidage (32).

2. Dispositif d'infusion (1) selon la revendication 1, **caractérisé en ce que** l'élément d'actionnement (33) et l'élément presseur (31) guidé longitudinalement sont aptes à être vissés de manière télescopique, par zones, à l'aide du mécanisme à filetage, l'élément d'actionnement (33) étant bloqué dans sa position axiale.

3. Dispositif d'infusion (1) selon la revendication 1 ou 2, **caractérisé en ce que** le mécanisme à filetage comprend au moins une zone en forme de rampe qui va en montant dans le sens axial.

4. Dispositif d'infusion (1) selon la revendication 3, **caractérisé en ce que** l'élément d'actionnement (33) a une forme annulaire et la zone en forme de rampe montante est disposée sur l'élément d'actionnement (33).

5. Dispositif d'infusion (1) selon l'une des revendications 1 à 4, **caractérisé en ce que** l'élément presseur (31) guidé longitudinalement et relié à la partie supérieure (2) a une forme annulaire et la nervure de guidage (32) hélicoïdale au moins par zones est disposée sur la surface périphérique extérieure dudit élément presseur (31) guidé longitudinalement.

6. Dispositif d'infusion (1) selon la revendication 5, **caractérisé en ce que** la nervure de guidage (32) présente, à un endroit associé à la position d'infusion, une partie horizontale (39).

7. Dispositif d'infusion (1) selon l'une des revendications 1 à 6, **caractérisé en ce que** le dispositif de soulèvement, la partie supérieure (2) et la partie inférieure (3) de la chambre d'infusion (18) sont logés dans un boîtier (4).

8. Dispositif d'infusion (1) selon la revendication 7, **caractérisé en ce que** l'élément presseur (31) guidé longitudinalement présente une ailette de guidage (42) tandis que le boîtier (4) présente une rainure de guidage (43), et l'ailette de guidage (42) est disposée mobile dans ladite rainure (43) afin de guider axialement l'élément presseur (31) guidé longitudinalement.

9. Dispositif d'infusion (1) selon la revendication 7 ou 8, **caractérisé en ce que** l'élément d'actionnement rotatif (33) est conçu pour pouvoir être actionné de l'extérieur du boîtier (4) par une poignée (36) apte à pivoter sur un axe vertical (A).

10. Dispositif d'infusion (1) selon la revendication 8, **caractérisé en ce que** le boîtier (4) présente sur le côté extérieur au moins une surface de préhension verticale.

11. Dispositif d'infusion (1) selon l'une des revendications 1 à 10, **caractérisé en ce que** la partie supérieure (2) comprend une plaque de pression (7), et la plaque de pression (7) forme avec la partie inférieure (3) la chambre d'infusion (18).

12. Dispositif d'infusion (1) selon l'une des revendications 1 à 11, **caractérisé en ce qu'**il est prévu entre la partie supérieure (2) et la partie inférieure (3) au moins un joint d'étanchéité (15) qui réalise l'étanchéité de la chambre d'infusion (18) entre la partie supérieure (2) et la partie inférieure (3).

13. Dispositif d'infusion (1) selon la revendication 11 ou 12, **caractérisé en ce que** la plaque de pression (7) présente un rebord (16) qui a une forme annulaire, qui dépasse axialement et qui, pour former la chambre d'infusion (18), appuie dans la position d'infusion sur la partie inférieure (3).

14. Dispositif d'infusion (1) selon l'une des revendications 1 à 13, **caractérisé en ce que** la partie inférieure (3) est conçue comme une cassette mobile qui, en position ouverte, est mobile entre une position de fonctionnement et une position de mise en place ou d'évacuation.

15. Dispositif d'infusion (1) selon la revendication 14, **caractérisé en ce que** la cassette mobile, dans la position d'infusion, est disposée entre la partie supérieure (2) et une plaque d'appui (23) reliée au boîtier (4).

16. Dispositif d'infusion (1) selon l'une des revendications 7 à 15, **caractérisé en ce qu'**il est prévu entre la partie inférieure (3) et le boîtier (4) au moins un joint d'étanchéité (25) qui réalise l'étanchéité de la partie inférieure (3) par rapport au boîtier (4).

17. Dispositif d'infusion (1) selon la revendication 15 ou 16, **caractérisé en ce que** la cassette mobile présente au moins une saillie (21) qui a une forme annulaire, qui dépasse axialement et qui appuie sur la plaque d'appui (23), dans la position d'infusion.

18. Dispositif d'infusion (1) selon l'une des revendications 12 à 17, **caractérisé en ce que** l'élément d'actionnement (33) et la plaque d'appui (23) sont reliés au boîtier (4).

19. Dispositif d'infusion (1) selon l'une des revendications 1 à 18, **caractérisé en ce que** la partie supérieure (2) et la partie inférieure (3) de la chambre d'infusion (18) forment dans la position d'infusion une chambre d'infusion (18) fermée.

20. Machine à café basse pression avec un dispositif d'infusion (1) selon l'une des revendications 1 à 19 et au moins un sachet-filtre (dosette de café souple) disposé dans le creux de la partie supérieure (3) de la chambre d'infusion (18) et rempli de café moulu.
